# EUROPEAN PATENT APPLICATION

(11) **EP 2 120 215 A2**
(43) Date of publication of application: **18.11.2009**
(21) Application number: 09005537.7
(22) Date of filing: 20.04.2009
(51) Int. Cl.: G07C 9/00, G06K 9/00

(54) **Biological pattern imaging device, biological pattern imaging method, and biological pattern imaging program**

(30) Priority: 12.05.2008 JP 2008125298
(71) Applicant: Nec Corporation, Tokyo 108-8001 (JP)
(72) Inventor: Higuchi, Teruyuki, Tokyo 108-8001 (JP); Kamei, Toshio, Tokyo 108-8001 (JP)
(74) Representative: Glawe, Delfs, Moll

(57) **Abstract**

To lighten influences of external light when picking up images of biological patterns. The biological pattern imaging device includes a casing having an opening part on one of surfaces. The opening part is in a size that is about to be covered in a closed state when a biological part is placed thereon. The casing contains a light source for irradiating the biological part placed on the opening part, and an imaging part for picking up an image of the irradiated biological part.

## Description

### CROSS-REFERENCE TO RELATED APPLICATION

This application is based upon and claims the benefit of priority from Japanese patent application No. 2008-125298, filed on May 12, 2008, the disclosure of which is incorporated herein in its entirety by reference.

### BACKGROUND OF THE INVENTION

### 1. Field of the Invention

The present invention relates to a biological pattern imaging device used for authenticating individuals. More specifically, the present invention relates to a device for inputting hand biological information.

### 2. Description of the Related Art

As a related art of a device for performing personal authentication by utilizing human biological information, there is disclosed a biological authentication device which performs personal authentication by utilizing a blood vessel pattern of a palm (Japanese Unexamined Patent Publication 2003-85538: Patent Document 1). This device irradiates light onto the palm by a near infrared LED, picks up an image by highlighting the blood vessel pattern based on a difference in light absorption of the blood in the blood vessel and light absorption in the other part of the palm, and performs the personal authentication based on the obtained blood vessel pattern. Further, an imaging device used in this device picks up the image of the blood vessel pattern of the palm without having a contact, so that a guide for stabilizing the position of the palm by having the wrist and fingers as the contact points is provided to the device main body.

Further, as a related art of a device for performing personal authentication by utilizing human biological information, there is disclosed a biological authentication device (finger vein authentication device) which performs personal authentication by utilizing a finger blood vessel (finger vein) pattern (Japanese Unexamined Patent Publication 5-145952: Patent Document 2). This device irradiates light onto the finger by a near infrared LED, and picks up an image of a finger imaging-target part by an imaging part that is configured with a camera or the like without having a contact.

Further, this finger vein authentication device has a light-shielding cover for suppressing intrusion of external light into the imaging part. This light-shielding cover is placed on both sides of the imaging-target finger along the longitudinal direction of the finger so as not be in contact with the finger. Further, there is also disclosed a case in which a hood-type light-shielding cover is provided to cover a finger by using an infrared-ray cut film.

Furthermore, this finger vein authentication device has a hood by using a near-infrared-ray cut film, which shields the near infrared ray and transmits visible light. This makes it possible to lighten a sense of oppression, a sense of displeasure, and a sense of unease felt by a user when the user inserts the finger into a nontransparent hole.

Further, as a related art of a device for performing personal authentication by utilizing human biological information, there is disclosed a finger vein authentication device to which a devise is applied for suppressing intrusion of external light into an imaging part(Japanese Unexamined Patent Publication 2006-107401: Patent Document 3). Regarding the structure for picking up the image of the finger vein, this finger vein authentication device has the same basic structure as that of the device disclosed in Patent Document 2. However, the device of Patent Document 3 uses an external light shielding cover which is normally housed within the device main body, and pulled out towards the outside the device main body when being used. With the external light shielding cover, intrusion of external light including near infrared rays such as sunlight is blocked.

However, with the related technique disclosed in Patent Document 1, the sensor light (near infrared LED) is irradiated onto the part to be the imaging target, and no special light-shielding device is provided. Thus, for example, there is a large open space between the imaging part (camera) and the guide on which the palm is placed. Therefore, when there is sunlight such as afternoon sunlight shining in, it may become difficult to pick up an image or the picked-up image may become unclear.

Further, with the biological authentication device disclosed in Patent Document 2, there is a gap between the light-shielding cover and the imaging-target part (finger).
Thus, it is difficult to suppress the external light completely. Furthermore, in the case where the hood-type light-shielding cover is provided, an act of inserting the finger into a hole part gives a sense of oppression, a sense of displeasure, a sense of unease, and the like, for the user even if the hood is formed semitransparent.

Moreover, if the user suddenly changes the posture while the finger is in the device (e.g., when the user falls down by stumbling over something, or the user is pushed by someone), the user may hurt the finger because the body is to move out from the device while the finger is being restrained to the device.

Further, with the device disclosed in Patent Document 3, the user also feels a sense of oppression when using the device, since there is the cover provided to cover the imaging target.

Furthermore, the user needs to go through a troublesome work of taking out the light-shielding cover for using this device. Moreover, the mechanism of the device becomes complicated, which may cause a fault.

Further, with this device, the user needs to insert the finger into a hollow formed by the light-shielding cover. Thus, as in the case of the hood-type light-shielding cover of Patent Document 2, this is the device structure which gives a sense of displeasure and a sense of unease for the user when the user uses the device, and causes such an inconvenience for the user that the finger may be hurt.

### SUMMARY OF THE INVENTION

It is an exemplary object of the present invention to provide a biological pattern imaging device, a biological pattern imaging method, and a biological pattern imaging program, which can suppress influences of external light effectively when picking up an image of a biological pattern.

In order to achieve the foregoing exemplary object, the biological pattern imaging device according to an exemplary aspect of the invention is a device which includes a casing having an opening part on one of surfaces. The opening part is in a size that is about to be covered in a closed state when a biological part is placed thereon. The casing contains a light source for irradiating the biological part placed on the opening part, and an imaging part for picking up an image of the irradiated biological part.

Further, the biological pattern imaging method according to another exemplary aspect of the invention is a method which picks up an image of a biological pattern when performing authentication of the biological pattern by using a biological pattern imaging device which includes a casing having an opening part that is covered in a close state when the biological part is placed thereupon on one of surfaces, an imaging part for picking up an image of the biological part, and a biological part detecting part which obtains the picked-up image of the biological part and detects the biological part placed on the opening part. The method includes: calculating a difference value between a pattern image of the picked-up biological part and a pattern image of a biological part picked up earlier; and detecting authenticity of the biological part on the opening part based on the difference value.

Furthermore, the biological pattern imaging program according to still another exemplary aspect of the invention is a program for enabling a control of picking up an image of a biological pattern when performing authentication of the biological pattern by using a biological pattern imaging device which includes a casing having an opening part that is covered in a close state when the biological part is placed thereupon on one of surfaces, an imaging part for picking up an image of the biological part, and a biological part detecting part which obtains the picked-up image of the biological part and detects the biological part placed on the opening part. The program enables a computer to execute: a function of calculating a difference value between a pattern image of the biological part closing the opening part, which is picked up through the opening part, and a pattern image of a biological part picked up earlier; and a function of detecting authenticity of the biological part on the opening part based on the difference value.

### BRIEF DESCRIPTION OF THE DRAWINGS

FIG. 1 is a perspective view of a schematic structure showing a first exemplary embodiment of a biological pattern imaging device according to the invention;
FIG. 2 is an explanatory illustration viewed from the back of a hand when picking up an image of a palm with the biological pattern imaging device disclosed in FIG. 1;
FIG. 3 is a schematic block diagram showing an internal structure of the biological pattern imaging device disclosed in FIG. 1;
FIG. 4 is a flowchart showing operation steps of palm authentication performed by the biological pattern imaging device disclosed in FIG. 1; and
FIG. 5 is a perspective view of a schematic structure showing a second exemplary embodiment of a biological pattern imaging device according to the invention.

### DETAILED DESCRIPTION OF THE EXEMPLARY EMBODIMENTS

Hereinafter, exemplary embodiments of the invention will be described in detail by referring to the accompanying drawings.

### (FIRST EXEMPLARY EMBODIMENT)

Here, the basic structure contents of the exemplary embodiments of the invention will be described.

In this exemplary embodiment, described is a biological pattern imaging device for picking up an image of a blood vessel pattern of a palm of a hand (referred to as "palm blood vessel pattern" hereinafter) used for personal authentication.

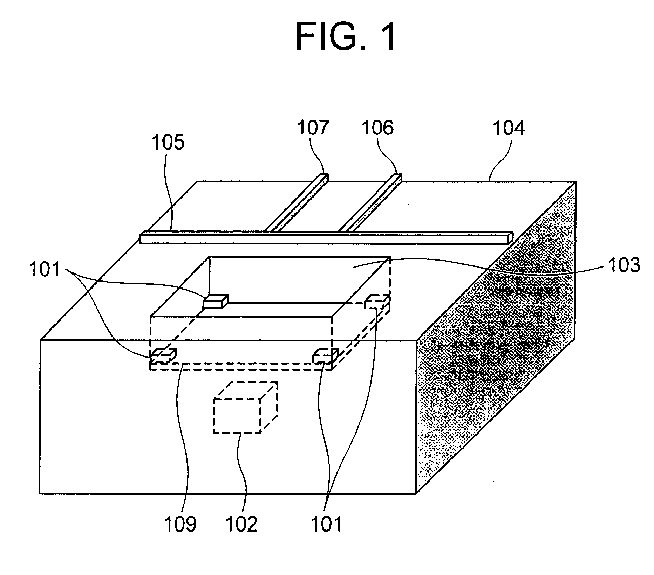

FIG. 1 is a perspective view of a schematic structure of a biological pattern imaging device related to the first exemplary embodiment viewed from the above.

As shown in FIG. 1, the biological pattern imaging device of this exemplary embodiment is configured with a casing 104 as a device main body, and the device includes an opening part 103 on the top face (casing top-face part) of the casing 104.

The opening part 103 is in a size that can be covered by a palm of a hand, when the palm of the hand as an imaging target is placed to be in contact with the casing top-face part. This makes it possible to effectively suppress intrusion of external light into the opening part 103 from the outside the casing, when picking up an image of the palm placed by covering the opening part 103.

Further, as shown in FIG. 1, on the casing top-face part of the casing 104, there are provided a basipodite guide 105 set along pits of the palm at the basipodites that are the knuckles between the palm and the finger, and middle-finger guides 106, 107 set along the longitudinal direction of the middle finger for aligning the position of the palm with the imaging part 102.

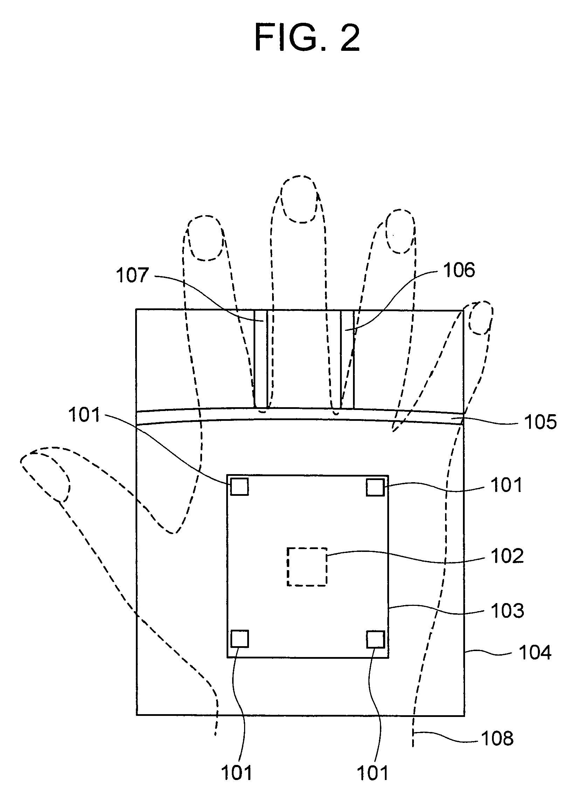

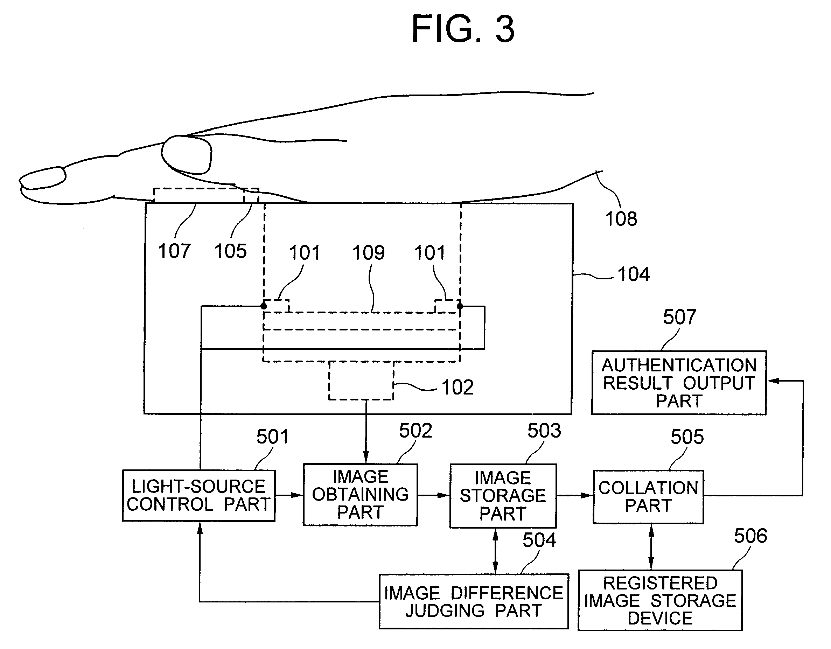

Further, as shown in FIG. 2, the biological pattern imaging device includes an imaging part 102 configured with a camera or the like provided inside the casing 104 by opposing to the center part of the opening part 103. As shown in FIG. 3, the biological pattern imaging device includes an infrared-ray transmission filter 109 on the casing top-face side with a specific distance from the imaging part 102. Four light sources 101 are provided at the four corners of the top-face side surface of the infrared-ray transmission filter 109.

FIG. 2 shows an illustration viewed from the back of a hand 108 of the user, when it is placed on the casing top-face part. Further, FIG. 3 shows an illustration viewed from the side of the casing 104.

The imaging part 102 provided inside the casing 104 is mounted into the inside the casing 104 while placing the lens thereof facing towards the opening part 103 side.

With this structure, the light sources 101 irradiate the palm of the hand placed on the opening part 103 of the casing top-face part, and the imaging part 102 picks up an image of the palm pattern (blood vessel pattern in this case) irradiated by the light sources 101 via the infrared-ray transmission filter 109.

The opening part 103 may be in any shapes such as a rectangular shape, a circular shape, or the like, as long as it is in a size and a shape which can be covered by the palm.

As the light sources 101, four near infrared LEDs with 760 nm wavelength are used. Those LEDs are placed at the positions corresponding to the four corners of the opening part 103 so as to irradiate the light to the palm part evenly.

With the use of the near infrared rays, the blood vessel pattern can be more emphasized than the case of observing the pattern with a visible light range by using normal white light sources. This is because absorption of hemoglobin flown in the blood vessels is greater with the wavelength range of about 760 nm, and the reflection of light is smaller than the biological texture as the background. Thus, in an image of the palm picked up by the near infrared rays, the blood vessel part is filmed dark.

The imaging part 102 has a lens and a two-dimensional imaging element such as a CCD sensor or a CMOS sensor. For this two-dimensional imaging element, used is an imaging element which exhibits sensitivity in a near infrared region of pixel number, which can pick up an image of the palm part with the resolution of about 6 dot/mm (about 300 dpi). For example, assuming that the opening part 103 is in a size of "53 mm (vertically) × 40 mm (laterally)" which is a size that can be covered by the palm, the imaging device may be set to have "320 pixels (vertically) × 240 pixels (laterally)" as the number of pixels. Further, the lens/diaphragm system is adjusted to be able to pick up an image in a thickness direction of the palm covering the opening part 103, through deepening the depth of field.

Further, external disturbance light can be suppressed through placing the infrared-ray transmission filter 109 between the imaging part 102 and the object (palm), as shown in FIG. 3. The external disturbance light is shielded between the infrared-ray transmission film 109 and the imaging part 102 by a lens tube or the like (FIG. 3).

As the infrared-ray transmission filter, a visible-light cut type infrared-ray transmission filter which exhibits a transmission property for the wavelength of 760 nm that is the wavelength of the light sources 101. Also, it is possible to use a band-pass filter type infrared-ray transmission filter.

Further, it is also possible to use a band-pass filter having a narrow transmission band, such as an interference filter. In particular, the use of the interference filter makes it possible to eliminate the external disturbance light effectively, since it has the narrow transmission band.

As described, it is possible to suppress influences of the external disturbance light through eliminating the wavelengths other than the sensing wavelength.

However, as light sources of environmental light, there are many types that have a continuous spectrum property, such as sunlight and light of white light bulbs. Therefore, it is not possible to fully eliminate the environmental light.

The infrared-ray transmission filter 109 functions not only for suppressing the external disturbance light but also for protecting the components inside the casing such as the lens of the imaging part 102 from dust and the like as well as for preventing those from being touched directly. Therefore, a wide-area but relatively low-price visible cut type infrared-ray transmission filter (IR-76, for example) is used for the infrared-ray transmission filter 109. Further, a high-price interference filter may be mounted in front of the lens of the imaging part 102 or in front of the two-dimensional imaging element where only a small-area filter is required.

As described, the opening part 103 is opened so that the imaging part 102 can pick up an image of the palm placed on top of the casing 104. The imaging part 102 is placed towards the opening part 103, and the infrared-ray transmission filter is placed in front of the imaging part 102 on the lens side.

Further, the size of the opening part 103 is set to be in a size that can be covered by the palm. In this exemplary embodiment, it is formed in a rectangular shape of "53 mm (vertically) × 40 mm (laterally)".

The casing 104 has the light sources 101 and the imaging part 102, and holds each of the guides (basipodite guide 105, and the middle-finger guides 106, 107) on the top part (the casing top-face part).

The casing top-face part has the opening part 103, and it is in a flat form. Thus, the position of the hand placed on the casing top-face part is stabilized. Further, stabilization of the palm on the plane position makes it possible to stabilize the resolution of the vein pattern of the palm to be picked up. Therefore, the collation accuracy can be improved.

Further, as described above, the casing 104 is provided with the basipodite guide 105, and the middle-finger guides 106, 107 for restricting the remaining three kinds of free mobility (lateral movement, vertical movement, rotation on the plane of the top face) of the hand 109 placed on the casing top-face part.

The basipodite guide 105 is a protrusion-type guide of about 3 mm provided on the top face of the casing 104, which restricts the vertical movement of the palm (movement from the near side to the far side) as well as rotation of the palm on the top face.

It is also possible to provide a guide for guiding the position of the wrist side through forming a pit on the front side of the top-face part of the casing 104 from the user side so as to restrict the vertical movement and rotation more effectively.

The middle-finger guides 106 and 107 are also the protrusion-type guides of about 3 mm provided on the top-face part of the casing 104, as in the case of the basipodite guide 105. As shown in FIG. 2, each of the guides 106 and 107 is provided on both sides of the position to which the authentication-target middle finger of the hand is to be guided.

With the middle-finger guides 106 and 107, the lateral movement of the palm position (movement along the basipodite guide) can be restricted.

Instead of providing the protrusion-type guide, it is also possible to provide a pit on a part corresponding to the middle finger as the middle-finger guide 106 for the middle finger of the hand placed on the top-face.

Furthermore, it is also possible to provide guides for the index finger and the ring finger other than for the middle finger.

Further, it is also possible to form an uneven shape on the casing top-face part in accordance with the shape of the palm for guiding the palm to be placed and for minimizing the gap between the hand 108 on the opening part 103 and the top-face part.

As described, through restricting the vertical movement, the lateral movement, and the rotary movement of the palm, the part to be imaged is stabilized. Therefore, common areas when performing image collation can be increased, so that the collation accuracy can be improved.

Further, as shown in FIG. 3, the biological pattern imaging device of the exemplary embodiment includes: a light-source control part 501 which is connected to the light sources 101 for controlling on and off of the light sources; an image obtaining part 502 which obtains images picked up by the imaging part 102; an image storage part 503 which stores the images obtained by the image obtaining part 502; an image difference judging part 504 which calculate a difference between a plurality of obtained images; and a collation part 505 which performs collation of the picked up palm image and an image set in advance.

With this structure, it is possible to automatically detect whether or not the palm of the user is placed on the casing top part, and to pick up an image of the palm pattern at a proper imaging timing.

Each function executed by the light-source control part 501, the image obtaining part 502, the image difference judging part 504, and the collation part 505 may be designed to be executed through program processing performed by a CPU that is provided in advance to the biological pattern imaging device as the exemplary embodiment.

Hereinafter, this structure will be described in detail.

The light-source control part 501 has a light-up control function for controlling on and off regarding the light sources 101. The light-source control part 501 turns off the light sources 101, when detecting that the images is outputted to the collation part from the image storage part 503.

The image obtaining part 502 has an image obtaining/ storing function which obtains the images picked up by the imaging part 102 and stores the obtained images to the image storage part 503.

Note here that the image obtaining part 502 obtains the images from the imaging part 102 regularly. The image obtaining/storing function of the image obtaining part 502 may be so set that it is executed when the light sources 101 are on.

The image storage part 503 is a storage device such as a memory for temporarily storing the images obtained by the image obtaining part 502, and it is capable of keeping a plurality of images stored from the image obtaining part 502.

The image difference judging part 504 has an image difference calculating function which calculates the sum total of the difference between the inter-frame images of the image (previous-frame image) stored in the image storage part 503 and the newly obtained image.

Further, the image difference judging part 504 has a state flag update function which stores a state flag as information indicating whether a palm is placed (with palm) or a palm is not placed (no palm) in the image storage part, and updates the state flag based on a result obtained by a difference threshold value judging function.

Furthermore, the image difference judging part 504 has the difference threshold value judging function which compares the obtained image difference value in the inter-frame images and an image difference threshold value set in advance, and judges whether or not there is a change in the inter-frame images.

For example, in a state where it is judged that no palm is placed on the opening part 103, the image difference judging part 504 judges whether or not the sum total of the difference in the inter-frame images (inter-frame image difference) is larger than the threshold value that is set in advance. When the inter-frame image difference is larger, the image difference judging part 504 judges that an authentication judgment target (palm) is placed on the opening part 103, and updates the state flag to indicate "with palm".

In the meantime, when judged that the palm is placed on the opening part 103, the image difference judging part 504 executes the difference threshold value judging function, and judges that there is no movement in the placed palm when the inter-frame image difference is smaller than the threshold value.

In this case, i.e., when it is judged that there is no image difference between the picked up inter-frame images of the palm, the image difference judging part 504 has a function of collation image output function which outputs the image stored in the image storage part 503 to the collation part 505 as the image used for collation (collation image).

Furthermore, the image difference judging part 504 has a function which informs the light-source control part 501 that the image has been outputted to the collation part 505 from the image storage part 503.

The collation part 505 has a registered image storage device 506 which stores a palm blood vessel pattern image and a palm print image registered in advance.

Further, the collation part 505 has an image authentication judging function which collates the image outputted from the image storage part 503 with the registered image registered in advance so as to make personal authentication judgment.

Furthermore, the collation part 505 may have an authentication result output device 507 connected thereto for outputting and displaying the collation result.

The light-source control part 501, the image obtaining part (corresponds to a biological part detecting part) 502, the image storage part 503, the image difference judging part (corresponds to a biological part detecting part) 504, the collation part 505, the registered image storing device 506, and the authentication result output device 507 may be provided inside the imaging part 102. Alternatively, those components may be connected to the imaging part 102 and provided outside the casing 104.

As described above, for picking up the image of the palm blood vessel pattern with the biological pattern imaging device, the authentication subject (the user) first places the palm on the casing 104 to cover and seal the top-face opening part 103. At this time, it is desirable to place the hand on the casing top-face part in such a manner that the bases of the fingers are placed along the basipodite guide 105, the middle finger is placed along the middle-finger guides 106, 107, and the palm covers the opening part 103 so as to seal the opening part 103.

Next, operations of the biological pattern imaging device according to the first exemplary embodiment will be described.

First, the image obtaining device 502 obtains the picked-up pattern image of the biological part. The image difference judging part 504 then calculates an inter-image difference between the pattern image and the previous-state pattern image obtained in advance, and detects whether or not the biological part is placed on the opening part based on the inter-image difference. Thereafter, the collation part 505 performs personal authentication based on the pattern image.

Note here that an image difference calculating step, a biological part detection judging step, and an image authentication step may be executed by putting the execution contents into a program and having it executed by a computer.

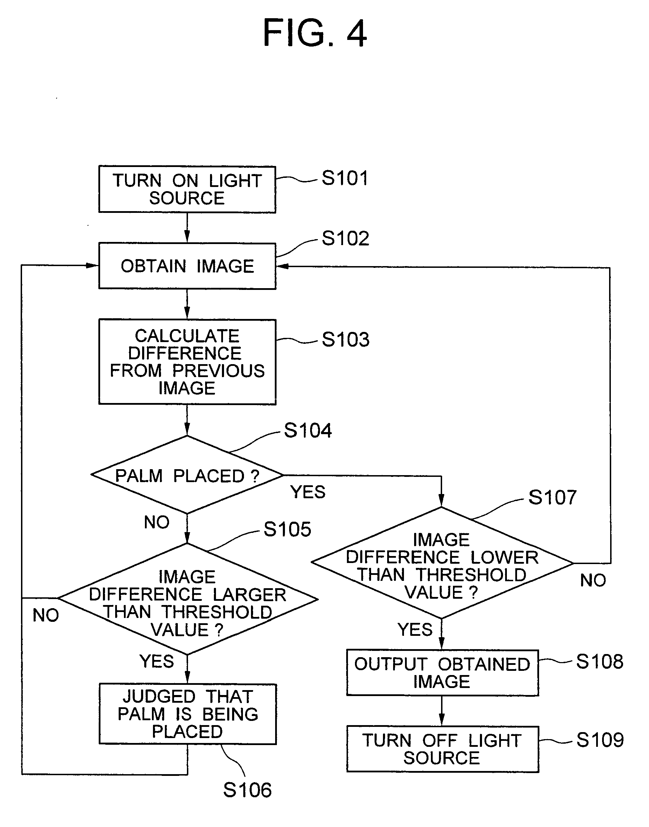

Next, the operations of the biological pattern imaging device according to the first exemplary embodiment will be described by referring to a flowchart of FIG. 4.

First, the light-source control part 501 turns on the light sources 101 (step S101). The image obtaining part 502 obtains the image picked up by the imaging part 102 (step S102), and stores the image into the image storage part 503.

Then, the image difference judging part 504 calculates the sum total of the differences in the inter-frame images between the image that is obtained previously and stored in the image storage part 503 (previous frame image) and the image obtained this time (step S103: a difference calculating step) .

Then, the image difference judging part 504 judges whether or not the palm is being placed (step S104). When the palm is not being placed, the image difference judging part 504 judges whether or not the sum total of the differences is larger than the threshold value that is set in advance (step S105).

When the sum total is larger than the threshold value, the image difference judging part 504 judges that the palm as an authentication target is placed, and updates the state flag to "with palm" (step S106).

Then, the image obtaining part 502 obtains the image again (step S102), and the image difference judging part 504 repeatedly executes difference calculation (difference calculating step) of the inter-frame images in the same manner described above (step S103).

In the meantime, when it is judged in step S104 that the palm is being placed on the casing 104, the image difference judging part 504 makes judgment on the sum total of the differences and the threshold value, and judges that there is no movement in the placed hand when the sum total is smaller than the threshold value (step S107).

At this time, the image difference judging part 504 outputs the image stored in the image storage part 503 to the collation part 505 as the image used for collation (step S108) .

In the meantime, when it is judged in step S107 that the image difference is larger than the threshold value (NO), the image difference judging part 504 judges that the palm placed on the casing 104 is removed, and the image obtaining part 502 obtains an image again.

Following step S108, the light-source control part 501 detects the output of the image to the collation part and turns off the light sources 101 at last (step S109).

For the operation of the palm authentication, it is also possible to provide a button switch for starting the authentication operation for allowing the user to push the button to start the operation.

Further, for applying the device to ATM terminals at banks, it is possible to employ a structure in which the authentication operation is set to start when it becomes necessary to conduct biological authentication, e.g., when a card of the user is being inserted.

As described above, with this exemplary embodiment, it is not necessary to provide a cover to cover the hand as the authentication target. Thus, it is possible to pick up the images of the biological pattern (palm blood vessel pattern, for example) by effectively suppressing intrusion of external disturbance light generated by the environmental light such as sunlight and illumination light, while keeping the openness.

Further, even though the biological issues tend to transmit the near infrared rays relatively easily, those rays are not perfectly transmitted. Particularly, a high blocking effect can be observed in the part such as the palm with a certain thickness with bone structure, so that great amount of light (external disturbance light) can be blocked. Thus, the external disturbance light can be blocked more effectively, which makes it possible to pick up the images of the pattern as the authentication target stably and to perform authentication actions steadily and precisely.

The exemplary embodiment above has been described by referring to the case of picking up the images of the blood vessel pattern of the palm of the hand. However, the exemplary embodiment may also be employed to pick up the images of the pattern of the palm (palm print) as the biological pattern.

In that case, in order to pick up the unevenness of the skin surface of the palm of the hand, it is desirable to have shadows of the unevenness on the skin surface as much as possible. Therefore, the light source 101 may be set to irradiate the light from one direction.

In this case, it is desirable for the light source 101 to be in a short wavelength with which the blood vessels are hard to be picked up. Further, considering the effect of eliminating the external disturbance light, the light source 101 may be of the wavelength band of the near infrared ray that is the same as the light source for picking up the blood vessels.

When the wavelength of the near infrared ray is used, a pattern in which a blood vessel pattern and a skin print pattern (palm print) are superimposed on one another is obtained as an image. Such image may be picked up as a pattern for biological authentication.

As a pattern matching technique for performing authentication of such superimposed pattern, it is possible to use a two-dimensional pattern matching technique depicted in Japanese Patent Application No. 2007-113264 (applied by the Inventor of this Specification), for example.

Further, in a case where the wavelength bands of the light sources for picking up the palm print and for picking up the palm blood vessel are the same, and not the superimposed pattern of the blood vessel pattern and the palm print but the palm print is to be picked up, the light source may be placed to irradiate the light from one direction as the palm print light source. With this, a sufficient-contrast palm print pattern can be obtained, and an influence of the external light which hinders identification of the picked-up palm print image can be sufficiently suppressed.

Thereby, the exemplary embodiment can be applied as a biological pattern imaging device in a multi-modal authentication, for example, which picks up images of the blood vessel pattern and the skin print pattern simultaneously and performs authentication, by combining vein authentication which performs authentication through picking up images of blood vessels such as veins with fingerprint authentication which performs authentication through picking up images of skin print patterns such as fingerprints and palm prints. Further, it is possible to pick up images of the blood vessel patterns and skin print patterns with high accuracy by suppressing the influences of the external disturbance light generated by the environmental light such as the sunlight and the illumination lights through suppressing the external disturbance light.

The present invention has the casing which has the opening part that is covered in a close state when the biological part is placed thereupon and the imaging part for picking up the biological part. Thus, as an exemplary advantage according to the invention, the biological part placed on the opening part can block the external light effectively. This makes it possible to lighten the influences of the external light when picking up the image of the biological pattern.

### (SECOND EXEMPLARY EMBODIMENT)

Next, described is a biological pattern imaging device of a second exemplary embodiment according to the invention. Same reference numerals are applied to the same components as those of the first exemplary embodiment described above.

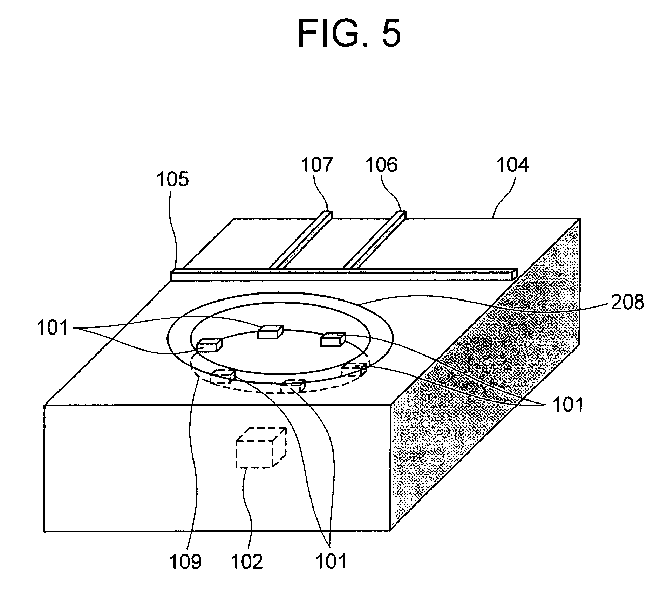

As shown in FIG. 5, the second exemplary embodiment is in almost the same structure as that of the first exemplary embodiment (FIG. 1) in terms of the device structure part. The second exemplary embodiment is different, however, in respect that it has a cushion 208 as a cushion member provided around the opening part 103.

This makes it possible to further suppress the external light leaked into the inside the casing from the gap between the palm and the contact face of the casing top-face part.

FIG. 5 is a perspective view of a schematic structure of the biological pattern imaging device according to the second exemplary embodiment viewed from the above.

As shown in FIG. 5, the biological pattern imaging device of this exemplary embodiment is configured with a casing 104 as a device main body, and the device includes an opening part 103 on the top face (casing top-face part) of the casing 104.

The opening part 103 is in a size that can be covered by a palm of a hand, when the palm of the hand as an imaging target is placed to be in contact with the casing top-face part.

This makes it possible to effectively suppress intrusion of external light into the opening part from the outside the casing, when picking up an image of the palm placed by covering the opening part 103.

Further, on the casing top-face part of the casing 104, there are provided a basipodite guide 105 set along pits of the palm at the basipodites that are the knuckles between the palm and the finger, and middle-finger guides 106, 107 set along the longitudinal direction of the middle finger for aligning the position of the palm with the imaging part 102. As described above, the cushion 208 as the cushion member is provided around the opening part 103.

Further, the biological pattern imaging device includes an imaging part 102 configured with a camera or the like provided inside the casing 104 by opposing to the center part of the opening part 103. The biological pattern imaging device also includes an infrared-ray transmission filter 109 on the casing top-face side with a specific distance from the imaging part 102, and six light sources 101 are provided on the top-face side surface of the infrared-ray transmission filter 109.

With this structure, the light sources 101 irradiate the palm of the hand placed on the opening part 103 of the casing top-face part, and the imaging part 102 picks up an image of the palm pattern (blood vessel pattern in this case) irradiated by the light sources 101 via the infrared-ray transmission filter 109.

Differences with respect to the first exemplary embodiment other than the cushion 208 are that the shape of the opening part 103 is a circular shape and that there are six light sources 101 in the second exemplary embodiment.

Further, the shape of the cushion 208 is ring-type circular shape which can be easily processed. Furthermore, in the secondary embodiment, the opening part 103 is formed in a circular shape in accordance with the ring-type cushion 208.

The cushion 208 is a ring-type member obtained by filling polyethylene insulation into polyurethane synthetic leather, and it is provided on the casing top-face part by surrounding the opening part 103.

As described, through forming the cushion 208 with an elastic material, the palm placed on the opening part 103 and the casing top face can be fitted closely in an effective manner.

For example, if a non-elastic material is used for the material on the casing top face, it is difficult to have the palm of the user closely fitted in a perfect manner with the casing top-face part even if the casing top-face part is formed to fit the shape of the palm unless it is shaped in accordance with each individual.

By mounting the cushion formed by using the elastic material on the casing top-face part, the palm can be fitted closely with the cushion by deformation of the cushion to fit the shape of the palm of each individual. This makes it possible to eliminate the gap therebetween, so that intrusion of the external disturbance light can be prevented.

Note here that the shape of the cushion 208 is not limited only to the circular shape. It is also possible to form the cushion with a cushion member in a shape that covers the range of the top-face part of the casing 104 except for the opening part 103.

Further, the operations steps of the palm authentication are the same as those described in the first exemplary embodiment.

As described above, the biological pattern imaging device of this exemplary embodiment can suppress the influence of the external disturbance light more effectively. Therefore, the biological pattern imaging device can be utilized in various environments and scenes regardless of the installed places such as outdoors, indoors, and at the windows.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

### INDUSTRIAL APPLICABILITY

The present invention can be applied to the usages such as an authentication system when performing authentication of a user, for a system used for specifying the user in which security needs to be taken in to consideration. For example, the present invention can be applied to a system which performs personal authentications for performing boarder controls of a space where security needs to be secured, e.g., entering/leaving controls, log-in controls for computers, log-in controls for portable telephones, and immigration controls.

Further, the present invention can be applied not only to a system for security-purpose but also to a system which is required for operations such as attendance controls and for checking double registrations of identification cards.

An example 1 describes a biological pattern imaging device, comprising a casing having an opening part on one of surfaces, wherein:
the opening part is in a size that is about to be covered in a closed state when a biological part is placed thereon; and
the casing contains light source means for irradiating the biological part placed on the opening part, and imaging means for picking up an image of the irradiated biological part.

An example 2 describes the biological pattern imaging device as described in the example 1, wherein a pattern of a biological part to be picked up is one of patterns selected from a blood vessel pattern, a skin print pattern, or a pattern configured with a plurality of those patterns imposed upon one another

An example 3 describes the biological pattern imaging device as described in the example 2, wherein the biological part is a palm of a hand.

An example 4 describes the biological pattern imaging device as described in the example 3, wherein:
the casing has a guide for aligning a position of the palm of the hand on an external face of the opening part, the guide being a basipodite guide formed in a shape to fit a pit on a palm side of a basipodite of the hand, a middle-finger guide formed to go along a longitudinal direction of a middle-finger, or a combination guide in which a plurality of those guides are included.

An example 5 describes the biological pattern imaging device as described in the example 4, wherein the basipodite guide has a ring-like form to surround the opening part, which is a ring-like member forming a protrusion shape around the opening part.

An example 6 describes the biological pattern imaging device as described in the example 4, comprising, on a face of the casing where the opening part is formed, a cushion member made of an elastic material formed to surround the opening part.

An example 7 describes the biological pattern imaging device as described in the example 1, wherein the imaging means comprises: image obtaining means for obtaining a pattern image of the picked up biological part; inter-image difference calculating means for calculating an inter-image difference value showing an image displacement degree between the obtained pattern image and a pattern image obtained earlier; biological part detection judging means for judging whether or not the biological part is placed on the opening part based on the inter-image difference value; and image authentication means for performing personal authentication based on the pattern images.

An example 8 describes a biological pattern imaging method which picks up an image of a biological pattern when performing authentication of the biological pattern by using a biological pattern imaging device which comprises a casing having an opening part that is covered in a close state when the biological part is placed thereupon on one of surfaces, imaging means for picking up an image of the biological part, and biological part detecting means for obtaining the picked-up image of the biological part and detecting the biological part placed on the opening part, the method comprising:
picking up the biological part closing the opening part as a subject through the opening part;
calculating a difference value between a pattern image of the picked-up biological part and a pattern image of a biological part picked up earlier; and
detecting authenticity of the biological part on the opening part based on the difference value.

An example 9 describes a biological pattern imaging program for enabling a control of picking up an image of a biological pattern when performing authentication of the biological pattern by using a biological pattern imaging device which comprises a casing having an opening part that is covered in a close state when the biological part is placed thereupon on one of surfaces, imaging means for picking up an image of the biological part, and biological part detecting means for obtaining the picked-up image of the biological part and detecting the biological part placed on the opening part, the program enabling a computer to execute:
a function of calculating a difference value between a pattern image of the biological part closing the opening part, which is picked up through the opening part, and a pattern image of a biological part picked up earlier; and
a function of detecting authenticity of the biological part on the opening part based on the difference value.

## Claims

1. A biological pattern imaging device, comprising a casing having an opening part on one of surfaces, wherein:
the opening part is in a size that is about to be covered in a closed state when a biological part is placed thereon; and
the casing contains light source means for irradiating the biological part placed on the opening part, and imaging means for picking up an image of the irradiated biological part.

2. The biological pattern imaging device as claimed in claim 1, wherein a pattern of a biological part to be picked up is one of patterns selected from a blood vessel pattern, a skin print pattern, or a pattern configured with a plurality of those patterns imposed upon one another.

3. The biological pattern imaging device as claimed in claim 2, wherein the biological part is a palm of a hand.

4. The biological pattern imaging device as claimed in claim 3, wherein:
the casing has a guide for aligning a position of the palm of the hand on an external face of the opening part, the guide being a basipodite guide formed in a shape to fit a pit on a palm side of a basipodite of the hand, a middle-finger guide formed to go along a longitudinal direction of a middle-finger, or a combination guide in which a plurality of those guides are included.

5. The biological pattern imaging device as claimed in claim 4, wherein the basipodite guide has a ring-like form to surround the opening part, which is a ring-like member forming a protrusion shape around the opening part.

6. The biological pattern imaging device as claimed in claim 4, comprising, on a face of the casing where the opening part is formed, a cushion member made of an elastic material formed to surround the opening part.

7. The biological pattern imaging device as claimed in claim 1, wherein the imaging means comprises: image obtaining means for obtaining a pattern image of the picked up biological part; inter-image difference calculating means for calculating an inter-image difference value showing an image displacement degree between the obtained pattern image and a pattern image obtained earlier; biological part detection judging means for judging whether or not the biological part is placed on the opening part based on the inter-image difference value; and image authentication means for performing personal authentication based on the pattern images.

8. A biological pattern imaging method which picks up an image of a biological pattern when performing authentication of the biological pattern by using a biological pattern imaging device which comprises a casing having an opening part that is covered in a close state when the biological part is placed thereupon on one of surfaces, imaging means for picking up an image of the biological part, and biological part detecting means for obtaining the picked-up image of the biological part and detecting the biological part placed on the opening part, the method comprising:
picking up the biological part closing the opening part as a subject through the opening part;
calculating a difference value between a pattern image of the picked-up biological part and a pattern image of a biological part picked up earlier; and
detecting authenticity of the biological part on the opening part based on the difference value.

9. A biological pattern imaging program for enabling a control of picking up an image of a biological pattern when performing authentication of the biological pattern by using a biological pattern imaging device which comprises a casing having an opening part that is covered in a close state when the biological part is placed thereupon on one of surfaces, imaging means for picking up an image of the biological part, and biological part detecting means for obtaining the picked-up image of the biological part and detecting the biological part placed on the opening part, the program enabling a computer to execute:
a function of calculating a difference value between a pattern image of the biological part closing the opening part, which is picked up through the opening part, and a pattern image of a biological part picked up earlier; and
a function of detecting authenticity of the biological part on the opening part based on the difference value.
